# EUROPÄISCHE PATENTSCHRIFT

(11) **EP 3 287 663 B1**
(45) Veröffentlichungstag und Bekanntmachung des Hinweises auf die Patenterteilung: **15.05.2019**
(21) Anmeldenummer: 17187713.7
(22) Anmeldetag: 24.08.2017
(51) Int. Cl.: F16G 13/18, F16H 19/00

(54) **SCHUBKETTENZAHNSTANGE**
PUSH TOOTH ROD
CHAÎNES DE POUSSÉE FORMANT CRÉMAILLÈRE

(30) Priorität: 24.08.2016 DE 102016115736
(43) Veröffentlichungstag der Anmeldung: 28.02.2018
(73) Patentinhaber: IWIS Antriebssysteme GmbH & Co. KG, 81369 München (DE)
(72) Erfinder: Potdar, Abhijit, 81243 München (DE); Sahin, Orhan, 81377 München (DE)
(74) Vertreter: Grünecker Patent- und Rechtsanwälte PartG mbB

(56) Entgegenhaltungen:
- DE-T2-602005 003 660
- DE-U1-202012 001 762
- US-A- 5 803 418
- Stefanie Michel: "Kostengünstige Alternative zu Zahnstangen", , 16. April 2010 (2010-04-16), XP055440760, Gefunden im Internet: URL:https://www.konstruktionspraxis.vogel. de/kostenguenstige-alternative-zu-zahnstan gen-a-259702/ [gefunden am 2018-01-15]

## Beschreibung

Die vorliegende Erfindung betrifft eine Kettenzahnstange gemäß Oberbegriff von Anspruch 1. Des Weiteren betrifft die Erfindung die Verwendung einer Schubkette in einer solchen Kettenzahnstange, sowie einen Antrieb mit einer solchen Kettenzahnstange.

Zahnstangen werden als Maschinenelement in unterschiedlichen Bereichen der Technik eingesetzt und dienen generell dazu, eine Drehbewegung in eine geradlinige Bewegung oder umgekehrt umzusetzen. Neben einfachen Antrieben zur geradlinigen Bewegung von Bauteilen werden Zahnstangen auch in Zahnradbahnen, Lenkgetrieben oder in der Schleusentechnik eingesetzt. Herkömmliche Zahnstangen werden üblicherweise durch Fräsen der Verzahnung in einem geeigneten Stangenprofil hergestellt. Alternativ können Zahnstangen auch als Triebstockverzahnungen oder als Kettenzahnstangen hergestellt werden.

Derartige Kettenzahnstangen stellen eine kostengünstige Alternative zu gefrästen Zahnstangen dar und sind in aller Regel einfach zu installieren und einzustellen. Dabei wird ein Ende der Kette fixiert, während das zweite Ende der Kette mittels einer Spanneinrichtung auf Zug belastet wird, so dass die verwendete Gliederkette gespannt ist. Wie bei normalen Zahnstangen üblich, ist der Verlauf der Kette in aller Regel geradlinig. Kettenzahnstangen eröffnen auch die Möglichkeit, gebogene Formen einzunehmen. In vielen Fällen ist die verwendete Gliederkette in einem Käfigprofil angeordnet, dass einen Öffnungsschlitz zum Eingreifen eines an der Gliederkette entlanglaufenden Kettenrades aufweist. Solche Kettenzahnstangen können sowohl an dem sich bewegenden Element, als auch an dem feststehenden Element angeordnet sein.

Die Vorteile von Kettenstangen bestehen darin, dass sie eine geringe Geräuschentwicklung bei einer hohen Stabilität ermöglichen. Der Einsatz von Gliederketten aus dem Bereich der Kettentechnik lässt die Nutzung vorhandener Gliederketten für Kettenzahnstangen zu, die bereits zur Übertragung von Kräften optimiert sind. Darüber hinaus können Fluchtungsfehler, die zwischen Zahnstange und Antriebseinheit mit dem eingreifenden Kettenrad bestehen, besser ausgeglichen werden, da zum Eingriff in Kettenzahnstangen Kettenräder mit einer geringeren Kettenradbreite eingesetzt werden können. Des Weiteren sind Kettenzahnstangen unempfindlich gegenüber Zahnspielveränderungen und vermeiden gerade bei langen Zahnstangen einen modularen Aufbau und einen unerwünschten Versatz innerhalb der Zahnstange.

Kettenzahnstangen sind in der Technik als preiswerte Alternative zu gefrästen Zahnstangen bekannt und haben sich bereits vielfach bewährt. Durch die bisher üblichen Spannvorrichtungen kann die Kettenkraft der Kettenzahnstange sehr gut eingestellt werden, jedoch ist aufgrund von Wärmedehnungen und Kettenlängungen zuweilen ein Nachstellen erforderlich.

Ein weiterer Nachteil sind die relativ hohen Spannkräfte, die notwendig sind.

Aus dem Artikel von Stefanie Michel: "Kostengünstige Alternative zu Zahnstangen", 16. April 2010, ist die Verwendung von Ketten als Zahnstangenersatz bekannt. Das System wird über eine Ankerplatte sowie durch einen Spannsatz befestigt. Dieser ist mit einem Einfach-Kettenverbindungsglied mit der eigentlichen Kettenzahnstange verbunden.

Aus der DE 202012001762 U1 ist ein Kettentrieb für einen Stelltrieb zum automatischen Öffnen und Schließen einer Lüftungsvorrichtung bekannt. Hierzu sind ein Elektromotor, ein Getriebe und eine rücksteife Kette in einem gemeinsamen Gehäuse untergebracht.

Der vorliegenden Erfindung liegt die Aufgabe zugrunde, die Vorspannung der Kette einer gattungsgemäßen Kettenzahnstange zu verbessern.

Diese Aufgabe wird bei einer Kettenzahnstange durch die Merkmale des Anspruchs 1 gelöst. Die Kette ist als Schubkette ausgebildet und mittels der Spannvorrichtung eine Spannkraft derart induziert ist, dass die Schubkette in Zahnstangenrichtung auf Druck (Schub) belastet ist. Die in der Schubkette induzierte Spannkraft erzeugt in Zahnstangenrichtung eine Vorspannung, mit der nicht nur Wärmedehnung und Verschleißlängungen der Kette kompensiert, sondern durch die auch eine inhärente Vorspannung induziert werden kann, um auf die bislang üblichen Spannvorrichtungen zu verzichten. Die in der Schubkette induzierte Druckbelastung erzeugt eine spielfreie Kettenzahnstange, die ohne eine in Zugrichtung wirkende Spannvorrichtung und regelmäßiges Nachstellen einen exakten linearen Antrieb ermöglicht. Es wird somit eine Kettenzahnstange erzeugt, die eine einfache und wirtschaftliche Montage und einen entsprechend vorteilhaften Transport (als aufgerollte Kette) zulässt.

Die Kette ist als überhöhte Schubkette mit einer vorgegebenen Überhöhung ausgebildet ist, wobei die Spanneinrichtung die Überhöhung der Schubkette reduziert, um in der Schubkette eine Spannkraft zu induzieren (Die Schubkette wird flacher gedrückt). Die Überhöhung einer solchen überhöhten Schubkette erstreckt sich in Richtung der versteiften Gelenkrichtung der Kette und damit senkrecht zu der Schwenkachse durch die Gelenkbolzen und senkrecht zur Kettenlängsrichtung bzw. Kettenzahnstangenverlauf. Die Überhöhung der Schubkette ist dabei das Maß, um die sich die ungespannte Schubkette in Überhöhungsrichtung gegenüber einer Auflagefläche erhöht. Die Auflagefläche kann eben verlaufen oder konvex oder konkav gekrümmt sein. Die von der Spanneinrichtung gespannte Schubkette wird entgegen der Überhöhungsrichtung flachgedrückt bzw. flacher gedrückt, wodurch sich die Überhöhung der Schubkette reduziert, üblicherweise um mindestens 50 %, bevorzugt mindestens 80 %, insbesondere mindestens 90 %. Die Reduzierung der Überhöhung der Schubkette verbessert neben der spielfreien Ausgestaltung der Kettenzahnstange auch die Steifigkeit der Schubkette und optimiert dadurch die Gleichlaufeigenschaften und die Genauigkeit eines zugehörigen Antriebs mit einer solchen Kettenzahnstange. Je größer die Überhöhung, desto größer die induzierte Schub-/Spannkraft. Die Überhöhung ist immer größer als 0 mm. Bei der Bestimmung der Überhöhung der Schubkette ist das Eigengewicht der Schubkette zu berücksichtigen. Je größer die zu betrachtende Kettenlänge, desto größer wird auch dieser Einfluss des Eigengewichts. Die Überhöhung soll in dem Zustand gemessen werden, in dem die Schubkette ungespannt ist (d.h., das Eigengewicht der Kette noch keine Spannwirkung ausübt). Bei besonders schweren und/oder langen Ketten kann nämlich das Eigengewicht der Schubkette selbst als Spanneinrichtung dienen. Aus diesem Grunde ist es gegebenenfalls einfacher, die Überhöhung an einer auf die Seite gelegten Schubkette zu bestimmen. Der Verlauf der späteren Auflagefläche muss selbstverständlich dabei Berücksichtigung finden.

Günstigerweise beträgt die Überhöhung A größer als 0 %, bevorzugt größer als 0,2 % und weiter bevorzugt größer als 0,4 %, der Länge der Schubkette und höchstens 6 %, bevorzugt höchstens 4 % und weiter bevorzugt höchstens 2,5 %, der Länge der Schubkette. Innerhalb dieses Bereichs können die verschiedensten Vorspannungen erzielt werden, wobei eine Überlastung vermeidbar ist. Ein günstiger Bereich liegt zwischen 0,5 und 2 % der Länge der Schubkette. Unter Länge der Schubkette ist der für die Vorspannung wirksame Längenabschnitt der Schubkette zu verstehen.

Eine zweckmäßige Ausbildung sieht vor, dass als Spanneinrichtung eine Spannaufnahme mit Abstützbereichen vorgesehen ist, wobei sich die überhöhte Schubkette an den Abstützbereichen in und/oder entgegen der Überhöhungsrichtung abstützt, um die Überhöhung der Schubkette zu reduzieren. Solche Abstützbereiche ermöglichen eine einfache und sichere Ausgestaltung der Spannaufnahme und der Einleitung einer Spannkraft entgegen der Überhöhungsrichtung, um in der überhöhten Schubkette eine Schubkraft zu induzieren. Dabei ist der Abstand der sich im Wesentlichen gegenüberliegenden Abstützbereiche nur geringfügig höher als die Höhe der Schubkette in Überhöhungsrichtung (ggf. einschließlich eventuell vorhandener Sonderteile, wie z.B. Winkellaschen), so dass die Schubkette den Verlauf der Aufnahme annimmt (z.B. möglichst flach gedrückt ist), und eine möglichst große (z.B. maximale) Reduzierung der Überhöhung der Schubkette erreicht wird.

Für eine einfache Ausgestaltung der Kettenzahnstange kann die überhöhte Schubkette Versteifungslaschen aufweisen, die in der Überhöhungsrichtung ein entsprechendes Schultermaß aufweisen. Derartige Versteifungslaschen, bei der das Schultermaß, d.h. die Abstützlänge der Versteifungslaschen in Überhöhungsrichtung, bzw. in Richtung der versteiften Schwenkrichtung der Schubkette größer ist als die Teilung der Schubkette zuzüglich eines Gelenkspielausgleichs, ermöglicht eine konstruktiv einfache und sichere Ausbildung einer überhöhten Schubkette. Dabei können die Versteifungslaschen als separate Laschen und/oder als Außen- oder Innenlaschen und/oder als Sonderbauteile der Kette ausgebildet sein.

Eine sinnvolle Variante sieht vor, dass die Spannaufnahme als geschlitztes Kastenprofil ausgebildet ist. Ein solches Kastenprofil ist in vielen Abmessungen und Ausgestaltungen leicht und kostengünstig erhältlich. Darüber hinaus kann ein geschlitztes Kastenprofil auch leicht in andere Profilgeometrien integriert werden und als Teil eines multifunktionalen Profils die Ausbildung als Kettenzahnstange ermöglichen. Dabei können die in einer solchen Spannaufnahme vorgesehenen Abstützbereiche zum einen auf der geschlitzten Profilseite, sowie der gegenüberliegenden Bodenseite vorgesehen sein, wobei die Abstützbereiche auf der geschlitzten Profilseite die Spannkraft in oder entgegen der Überhöhungsrichtung auf die Versteifungslaschen einer überhöhten Schubkette aufprägen.

Um eine einfache Montage zu ermöglichen, können die Abstützbereiche auch auf die Rollen der Ketten ausgelegt sein, so dass beim Einführen der Kette in das Profil Rollreibungskräfte anstatt Gleitreibungskräfte zu überwinden sind. Der Schlitz ermöglicht den Eingriff eines Antriebelements z.B. Kettenrad.

Bei einer Variante ist vorgesehen, dass die Schubkette an einer Auflagefläche F zumindest in Richtung einer Antriebskraft fixiert ist. Hierdurch wird ein Verschieben der vorgespannten Schubkette (z.B. innerhalb eines Kastenprofils und/oder entlang der Auflagefläche F) verhindert.

Zum Fixieren der Schubkette an der Auflagefläche können als Bestandteil der Spanneinrichtung zumindest einige Kettenlaschen als Winkellaschen ausgestaltet sein. Die Schubkette kann mittels der Winkellaschen in einem Kastenprofil oder unmittelbar an einer Auflagefläche angebracht werden. Die Schubkette kann mittels der Winkellaschen so auf die oder in Richtung der Auflagefläche gedrückt werden, dass sie auf der Auflagefläche aufliegt oder im, bevorzugt gleichmäßigem, Abstand zu dieser angeordnet ist.

Des Weiteren bezieht sich die Erfindung auf einen Antrieb mit einer Antriebseinheit und einer der oben beanspruchten Ausführungsformen einer Kettenzahnstange, wobei eine zugehörige Schubkette auf einer Auflagefläche angeordnet und mittels einer von der Spanneinrichtung induzierten Spannkraft in Zahnstangenrichtung auf Druck (Schub) belastet ist, wobei die Antriebseinheit mit der Kettenzahnstange in Eingriff steht, um die Kettenzahnstange oder bevorzugt die Antriebseinheit und die damit verbundenen zu verfahrenden Elemente relativ zur Antriebseinheit zu bewegen. Ein derartiger Antrieb, sowohl für den Antrieb von Fenstern, Türen oder Toren, als auch für die lineare Bewegung von Komponenten in Industrieanlagen, kann mit einer steifen Kettenzahnstange die Drehbewegung einer Antriebseinheit sicher und spielfrei in eine geradlinige Bewegung zugeordneter Bauteile umsetzten und umgekehrt.

Darüber hinaus betrifft die vorliegende Erfindung auch die Verwendung einer überhöhten Schubkette in einer Kettenzahnstange nach einer zuvor beschriebenen Ausführungsform, wobei die Schubkette mittels einer Spanneinrichtung entgegen der Überhöhungsrichtung flachgedrückt bzw. flacher gedrückt ist, so dass die Schubkette auf einer Auflagefläche in Druckrichtung (Schubrichtung) vorgespannt ist. Eine derartige Verwendung einer überhöhten Schubkette ermöglicht die einfache Ausbildung einer spielfreien, steifen und individuell ausführbaren Kettenzahnstange.

Im Folgenden wird ein Ausführungsbeispiel der vorliegenden Erfindung anhand einer Zeichnung näher erläutert. Es zeigt:
- Fig. 1: eine Seitenansicht einer überhöhten Schubkette, die mit einer erfindungsgemäßen Kettenzahnstange nutzbar ist,
- Fig. 2: einen Schnitt durch eine erfindungsgemäße Kettenzahnstange in Kettenlängsrichtung mit einer Draufsicht auf die überhöhte Schubkette aus Fig. 1,
- Fig. 3: eine Schnittansicht der erfindungsgemäßen Kettenzahnstange aus Fig. 1 entlang der Linie A-A,
- Fig. 4: eine Seitenansicht einer erfindungsgemäßen Kettenzahnstange mit eingreifendem Kettenrad,
- Fig. 5: eine weitere Ausführungsform einer erfindungsgemäßen Kettenzahnstange in einer perspektivischen Darstellung,
- Fig. 6: die Kettenzahnstange aus Fig. 5 in einer vergrößerten Vorderansicht,
- Fig. 7: eine weitere Ausführungsform einer erfindungsgemäßen Kettenzahnstange in einer perspektivischen Darstellung, und
- Fig. 8: die Kettenzahnstange aus Fig. 6 in einer vergrößerten Vorderansicht.

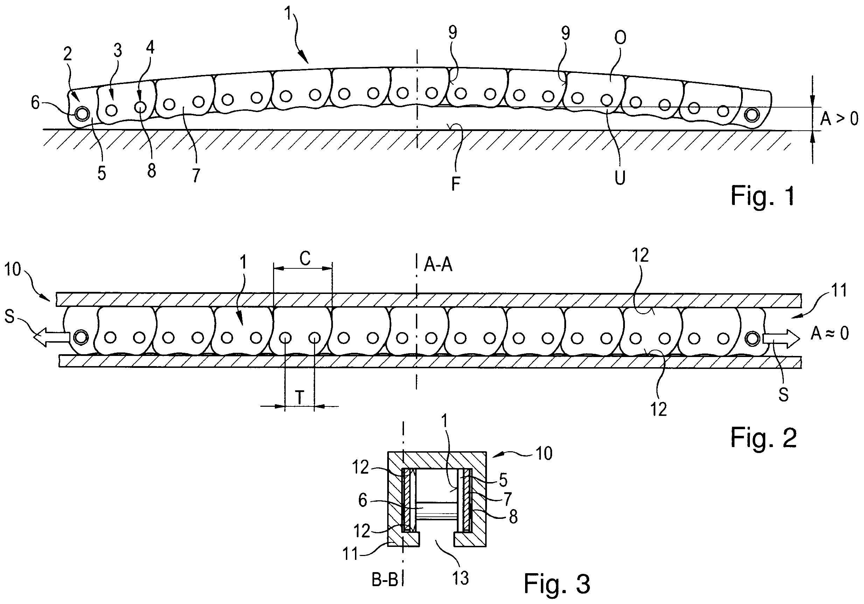

In Fig. 1 ist eine Seitenansicht einer überhöhten Schubkette 1 gezeigt, die als Gelenkkette miteinander abwechselnden Innenkettengliedern 2 und Außenkettengliedern 3 ausgebildet ist. Die Innenkettenglieder 2 und Außenkettenglieder 3 sind über Kettengelenke 4 miteinander verbunden. Die Innenkettenglieder 2 bestehen jeweils aus Innenlaschen 5, die im Abstand zueinander auf zwei Gelenkhülsen 6 angeordnet sind. Die Außenkettenglieder 3 bestehen aus zwei Außenlaschen 7, die von außen an den Innenlaschen 5 anliegen und über Gelenkbolzen 8 miteinander verbunden sind. Die Gelenkbolzen 8 erstrecken sich durch die Gelenkhülsen 6 der Innenkettenglieder 2, um das Kettengelenk 4 auszubilden. In der in Fig. 1 gezeigten Ausführungsform einer überhöhten Schubkette 1 sind sowohl die Innenlaschen 5 als auch die Außenlaschen 7 mit einer Abstützkontur 9 versehen, um sich gegen angrenzende Innenlaschen 5 und Außenlaschen 7 folgender Innenkettenglieder 2 und Außenkettenglieder 3 abzustützen. Alternativ können nur die Innenlaschen 5 oder Außenlaschen 7 mit einer Abstützkontur 9 versehen sein sowie zusätzlich oder alternativ spezielle Abstützlaschen und/oder Sonderbauteile vorgesehen sein, die eine entsprechende Abstützkontur 9 aufweisen. Die Abstützkontur 9 an den Innenlaschen 5 und Außenlaschen 7 ist nur auf der Oberseite O der Innenlaschen 5 und Außenlaschen 7 oberhalb der von dem zugehörigen Kettengelenken 4 gebildeten Längsachse ausgebildet, während auf der Unterseite U der Innenlaschen 5 und Außenlaschen 7 die Kontur der Innenlaschen 5 und Außenlaschen 7 eine Biegung zulässt. Entsprechend ist die Schubkette 1 durch die Abstützkontur 9 an den Innenlaschen 5 und Außenlaschen 7 in Richtung der Oberseite O versteift, während die Schubkette 1 in Richtung der Unterseite U der Innenlaschen 5 und Außenlaschen 7 geschwenkt werden kann. Die Schubkette 1 ist mit einem Schultermaß C versehen, das etwas größer ist als die Teilung T der Schubkette 1, einschließlich eines Maßaufschlags zum Ausgleich des Gelenkspiels.

Die überhöhte Schubkette 1 aus Fig. 1 weist in einem unbelasteten Zustand aufgrund des gewählten Schultermaßes C eine Überhöhung A auf. Durch die besondere Form der überhöhten Schubkette 1 bildet sich bei einer auf der Auflagefläche F (im vorliegenden Fall eine ebene Fläche) liegenden unbelasteten Schubkette 1 im Bereich zwischen den beiden Enden der überhöhten Schubkette 1 ein Abstand zur Auflagefläche F (z.B. ebenen Fläche) aus, der als Überhöhung A bezeichnet wird und neben der Ausführung der Schubkette 1 von der Länge der Schubkette 1 und der Position der Innenkettenglieder 2 und Außenkettenglieder 3 zu den Enden der Schubkette 1 abhängt. Dabei ist die Überhöhung A im Abstand zu den Enden der Schubkette 1 größer 0 und gegenüber der ebenen Fläche oder gegebenenfalls einer konvex oder konkav gekrümmten Fläche in Richtung der Versteifung der Schubkette 1 gerichtet. Der maximale Wert der Überhöhung A wird in der Mitte der Schubkette 1 zwischen den beiden Enden erreicht und beträgt im Ausführungsbeispiel (Fig. 1) ca. 2 % der Kettenlänge; kann aber im Extremfall bis zu 6 % der Kettenlänge betragen. Eine durch das Eigengewicht der Schubkette 1 verursachte Vorspannung und damit Verringerung der Überhöhung A darf nicht in die Bestimmung der Überhöhung A mit einfließen.

In Fig. 2 ist eine erfindungsgemäße Kettenzahnstange 10 gezeigt, bei der die überhöhte Schubkette 1 aus Fig. 1 in einer als Spanneinrichtung wirkenden Spannaufnahme 11 aufgenommen ist. Die Spannaufnahme 11 bildet auf der Oberseite O und der Unterseite U der Schubkette 1 Abstützbereiche 12 aus, die die überhöhte Schubkette 1 in eine flache, ebene Position drücken. Durch die von den Abstützbereichen 12 auf die Innenlaschen 5 und Außenlaschen 7 und/oder Rollen einwirkende Druckkraft verringert sich die Überhöhung A auf nahezu Null, wobei im Rahmen der Toleranz zwischen der Spannaufnahme 11 und der überhöhten Schubkette 1 eine geringe Überhöhung A verbleiben kann. Darüber hinaus lässt sich bei einer angepassten Überhöhung A der Schubkette 1 auch eine konvexe oder konkave Form der Spannaufnahme 11 und entsprechend eine konvexe oder konkave Form der Kettenzahnstange 10 realisieren. Durch die Druckkraft der Abstützbereiche 12 auf die Schubkette 1 wird in der Schubkette 1 in Kettenlängsrichtung eine Schubkraft S in Richtung der in Fig. 2 dargestellten Pfeile induziert, die eine inhärente Spannung der Schubkette 1 in der Kettenzahnstange 10 bewirkt. Darüber hinaus wird die Steifigkeit der Kettenzahnstange 10 durch die Kombination der Schubkraft S in der Schubkette 1 und der Druckkräfte der Abstützbereiche 12 auf die überhöhte Schubkette 1 deutlich erhöht und eine nahezu spielfreie Positionierung der Schubkette 1 in der Spannaufnahme 11 erreicht. In Abhängigkeit der Toleranz der Höhe der Schubkette 1 zur Spannaufnahme 11 kann die Schubkette 1 an einem oder beiden Enden befestigt sein, um eine relative Bewegung der Schubkette 1 in der Spannaufnahme 11 zu verhindern.

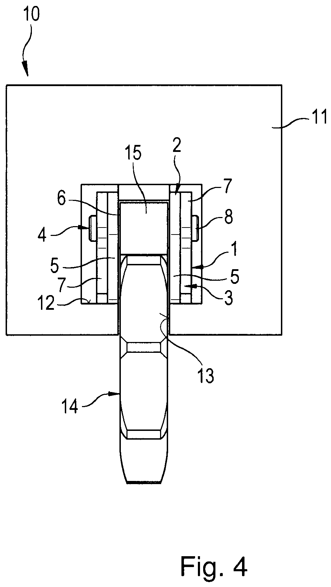

Fig. 3 zeigt einen Querschnitt durch die Kettenzahnstange 10 aus Fig. 2 entlang der Linie A-A. In diesem Querschnitt wird deutlich die Form der Spannaufnahme 11 ersichtlich, die als rechteckförmiges Kastenprofil mit einem Schlitz 13 in Kettenlängsrichtung ausgebildet ist. Über den Schlitz 13 kann, wie in Fig. 4 dargestellt ist, ein Kettenrad 14 einer zugehörigen Antriebseinheit in die Schubkette 1 zwischen die Kettengelenke 4 eingreifen, um die Kettenzahnstange 10 relativ zur Antriebseinheit zu bewegen. Das Kettenrad 14 ist mit einer Triebstockverzahnung versehen. In Fig. 3 ist auch der Längsschnitt B-B der Fig. 2 eingezeichnet. Bei der Ausführungsform der Fig. 4 sind auf den Gelenkhülsen 6 drehbare Rollen 15 angeordnet, die mit dem Kettenrad 14 in Eingriff kommen.

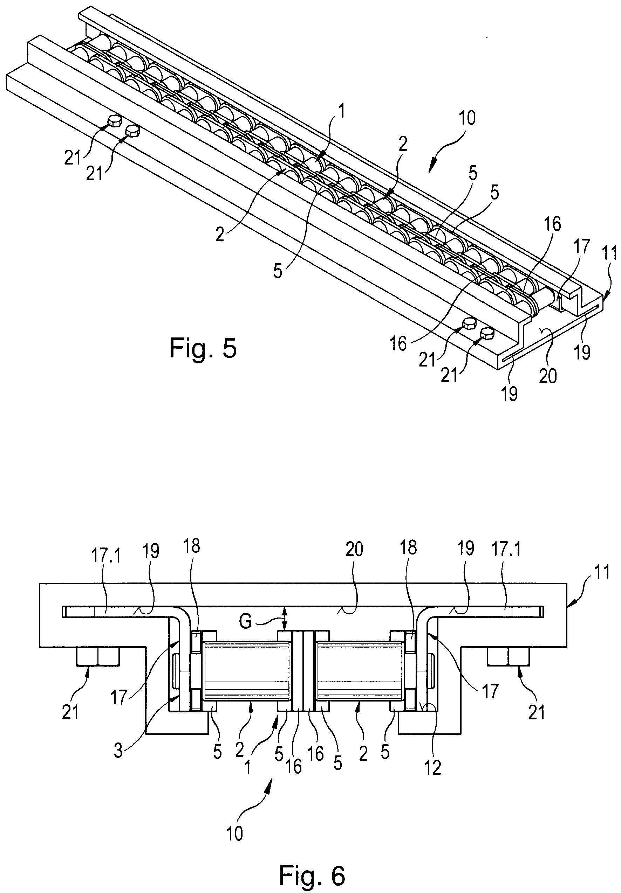

Anhand der Fig. 5 und 6 wird nunmehr eine weitere Ausführungsform einer Kettenzahnstange 10 näher erläutert.

Bei der verwendeten Schubkette 1 handelt es sich um eine Duplexkette, bei der jeweils zwei Innenkettenglieder 2 nebeneinander angeordnet werden; jedoch von zum Außenkettenglied 3 gehörenden Mittellaschen 16 voneinander beabstandet sind. Einige der Außenkettenglieder 3 sind mit Winkellaschen 17 versehen. Darüber hinaus befinden sich zwischen den Innenkettengliedern 2 und Außenkettengliedern 3 spezielle Versteifungslaschen 18, die so ausgestaltet sind, dass sie für eine entsprechende Überhöhung A der Schubkette 1 sorgen. Es reicht vollkommen aus, wenn die Außenkettenglieder 3 nur in bestimmten vorgesehenen Abständen mit Winkellaschen 17 versehen sind und ansonsten "normale" Außenlaschen 7 verwendet werden. Es können aber auch alle Außenkettenglieder 3 mit Winkellaschen 17 versehen sein.

Im vorliegenden Ausführungsbeispiel wird ein spezielles Kastenprofil als Spannaufnahme 11 verwendet, in welches die Schubkette 1 längs eingefädelt wird. Hierzu wird ein Schenkel 17.1 der Winkellaschen 17 in einen seitlich vom eigentlichen Kettenkanal weg erstreckenden Schlitzbereich 19 eingefädelt, während sich der Rest der Schubkette 1 an dem Abstützbereich 12 abstützt. Die Innenkettenglieder 2 und die Versteifungslaschen 18 weisen somit einen Abstand zur Grundseite 20 des Kettenkanals auf. Dieser Abstand ist im vorliegenden Fall nicht der Überhöhung A zuzurechnen. Die Schenkel 17.1 der Winkellaschen 17 dienen zusätzlich der Befestigung der Schubkette 1 an der Spannaufnahme 11 mittels Befestigungselementen 21 (im vorliegenden Fall Schrauben). In den Schlitz 13 der Spannaufnahme 11 greift dann ein geeignetes Doppelkettenrad ein.

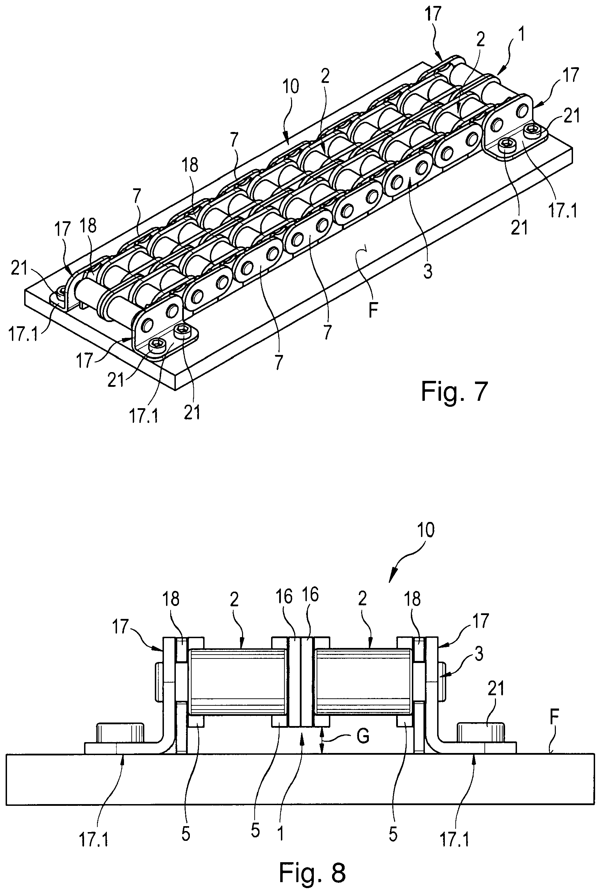

Anhand der Fig. 7 und 8 wird nunmehr eine weitere Ausführungsform einer erfindungsgemäßen Kettenzahnstange 10 näher erläutert.

Die Schubkette 1 ähnelt der Schubkette 1 aus dem vorangegangenen Ausführungsbeispiel. Einige der Außenkettenglieder 3, d.h. jeweils die am äußeren Ende der Schubkette 1, sind anstelle der üblichen Außenlaschen 7 mit Winkellaschen 17 versehen. Die Versteifungslaschen 18 zwischen den Innenkettengliedern 2 und den Außenkettengliedern 3 sind erhöht ausgebildet, so dass sie bei auf der Auflagefläche F aufgespannter Schubkette 1 auf der Auflagefläche F aufliegen. Die Befestigung an der Auflagefläche F erfolgt mittels der Schenkel 17.1 der Winkellaschen 17, die mit dem die Auflagefläche F formenden Bauteil mittels der Befestigungselemente 21 (hier Schrauben) verbunden werden. Die Winkellaschen 17 zusammen mit dem Befestigungselementen 21 dienen demnach als Spanneinrichtung. Eine derartig ausgestaltete Schubkette 1 kann jederzeit auf jedem zur Befestigung geeigneten Untergrund als Kettenzahnstange 10 aufgespannt werden. Selbstverständlich weisen die Versteifungslaschen 18 die geeignete Überhöhung A auf, so dass die zuvor mit ihrer konvexen Seite auf der Auflagefläche F aufliegende Schubkette 1 geradegedrückt wird und so aufgrund der sich dann ergebenden Schubkräfte eine Versteifung eintritt. Je nach Ausführungsform der Schubkette 1 kann aber bereits eine teilweise oder vollständige Vorspannung in der Schubkette 1 bereits durch das Eigengewicht der Schubkette 1 erreicht werden. Entsprechend reduziert sich auch die Belastung an den Winkellaschen 17 und den Befestigungselementen 21. Selbstverständlich kann die Auflagefläche F auch konvex oder konkav gekrümmt sein, so dass die Schubkette 1 dieser Krümmung in Längsrichtung folgt und eine entsprechend verlaufende Kettenzahnstange 10 ausformt. Die Überhöhung A der Versteifungslaschen 18 muss dann entsprechend an den Verlauf der Auflagefläche F angepasst werden, um die gewünschte Vorspannung zu erzielen. Die Innenkettenglieder 2 sowie die normalen Außenlaschen 7 und die Mittellaschen 16 befinden sich bei dieser Konstruktion wiederum im Abstand zur Auflagefläche F, so dass automatisch ausreichend Platz für den Eingriff der Zähne eines oder mehrerer Kettenräder vorhanden ist. Die Auflagefläche der Schenkel 17.1 der Winkellaschen 17 weist demnach einen Abstand G zur Unterkante der Innenkettenglieder 5 auf, der mindestens dem 0,2-fachen der Höhe der Innenkettenglieder 5 entspricht.

### Bezugszeichenliste

- 1: Schubkette
- 2: Innenkettenglieder
- 3: Außenkettenglieder
- 4: Kettengelenk
- 5: Innenlaschen
- 6: Gelenkhülsen
- 7: Außenlaschen
- 8: Gelenkbolzen
- 9: Abstützkontur
- 10: Kettenzahnstange
- 11: Spannaufnahme
- 12: Abstützbereiche
- 13: Schlitz
- 14: Kettenrad
- 15: Rollen
- 16: Mittellaschen
- 17: Winkellaschen
- 17.1: Schenkel
- 18: Versteifungslaschen
- 19: Schlitzbereich
- 20: Grundseite
- 21: Befestigungselemente

- A: Überhöhung
- C: Schultermaß
- F: Auflagefläche
- G: Abstand
- O: Oberseite
- T: Teilung
- S: Schubkraft
- U: Unterseite

## Patentansprüche

1. Kettenzahnstange (10) für einen Antrieb mit einer Kette und einer Spanneinrichtung zum Spannen der Kette,
**dadurch gekennzeichnet, dass** die Kette als Schubkette (1) ausgebildet ist und mittels der Spanneinrichtung (11) eine Spannkraft (S) derart induziert ist, dass die Schubkette (1) in Zahnstangenrichtung auf Druck belastet ist und dass die Kette als überhöhte Schubkette (1) mit einer Überhöhung (A) ausgebildet ist, wobei die Spanneinrichtung (11) die Überhöhung (A) der Schubkette (1) reduziert, um in der Schubkette (1) eine Spannkraft (S) zu induzieren.

2. Kettenzahnstange (10) für einen Antrieb nach Anspruch 1,
**dadurch gekennzeichnet, dass** die Überhöhung (A) größer ist als 0 %, bevorzugt größer ist als 0,2 %, und weiter bevorzugt größer ist als 0,4 %, der Länge der Schubkette und höchstens 6 %, bevorzugt höchstens 4 %, und weiter bevorzugt höchstens 2,5 %, der Länge der Schubkette (1) beträgt.

3. Kettenzahnstange (10) für einen Antrieb nach Anspruch 1 oder 2,
**dadurch gekennzeichnet, dass** als Spanneinrichtung eine Spannaufnahme (11) mit Abstützbereichen (12) vorgesehen ist, wobei an den Abstützbereichen (12) sich die überhöhte Schubkette (1) in und/oder entgegen der Überhöhungsrichtung abstützt, um die Überhöhung (A) der Schubkette (1) zu reduzieren.

4. Kettenzahnstange (10) für einen Antrieb nach einem der Ansprüche 1 bis 3,
**dadurch gekennzeichnet, dass** die überhöhte Schubkette (1) Versteifungslaschen (5,7) aufweist, die auf der Versteifungsseite der Schubkette (1) ein die Überhöhung (A) bewirkendes Schultermaß (C) aufweisen.

5. Kettenzahnstange (10) für einen Antrieb nach Anspruch 3oder 4,
**dadurch gekennzeichnet, dass** die Spannaufnahme (11) als geschlitztes Kastenprofil ausgebildet ist.

6. Kettenzahnstange (10) nach einem der Ansprüche 1 bis 5, **dadurch gekennzeichnet, dass** die Schubkette (1) an einer Auflagefläche (F) zumindest in Richtung einer Antriebskraft fixiert ist.

7. Kettenzahnstange (10) nach Anspruch 6, **dadurch gekennzeichnet, dass** zum Fixieren der Schubkette (1) an der Auflagefläche und als Bestandteil der Spanneinrichtung zumindest einige Kettenlaschen als Winkellaschen (17) ausgestaltet sind.

8. Antrieb mit einer Antriebseinheit und einer Kettenzahnstange (10) nach einem der Ansprüche 1 bis 7, wobei die Schubkette (1) an einer Auflagefläche (F) angeordnet und mittels einer von der Spanneinrichtung (11) induzierten Spannkraft (S) in Zahnstangenrichtung auf Druck belastet ist, wobei die Antriebseinheit mit der Kettenzahnstange (10) in Eingriff steht, um die Kettenzahnstange (10) relativ zur Antriebseinheit oder umgekehrt zu bewegen.

9. Antrieb nach Anspruch 8, **dadurch gekennzeichnet, dass** die Antriebseinheit ein mit der Kettenzahnstange (10) in Eingriff stehendes Kettenrad (14), bevorzugt mit Triebstockverzahnung, umfasst.

10. Verwendung einer überhöhten Schubkette (1) in einer Kettenzahnstange (10) nach einem der Ansprüche 1 bis 8, wobei die Schubkette (1) mittels einer Spanneinrichtung (11) entgegen der Überhöhungsrichtung flachgedrückt bzw. flacher gedrückt ist, so dass die Schubkette (1) entlang einer Auflagefläche (F) in Druckrichtung vorgespannt ist.

## Claims

1. Chain rack (10) for a drive with a chain and a tensioning device for tensioning the chain,
**characterized in that** the chain is designed as a push chain (1) and a tensioning force (S) is induced by means of the tensioning device (11) in such a way that the push chain (1) is loaded under pressure in rack direction, and that the chain is designed as a superelevated push chain (1) with a superelevation (A), wherein the tensioning device (11) reduces the superelevation (A) of the push chain (1) in order to induce a tensioning force (S) in the push chain (1).

2. Chain rack (10) for a drive according to claim 1,
**characterized in that** the superelevation (A) is greater than 0%, preferably greater than 0.2%, and more preferably greater than 0.4%, of the length of the push chain and is at most 6%, preferably at most 4%, and more preferably at most 2.5%, of the length of the push chain (1).

3. Chain rack (10) for a drive according to claim 1 or 2,
**characterized in that** a tensioning receptacle (11) with support regions (12) is provided as a tensioning device, wherein the superelevated push chain (1) is supported on the support regions (12) in and/or against the direction of superelevation in order to reduce the superelevation (A) of the push chain (1).

4. Chain rack (10) for a drive according to one of claims 1 to 3,
**characterized in that** the superelevated push chain (1) comprises stiffening plates (5, 7) which, on the stiffening side of the push chain (1), have a shoulder dimension (C) effecting the superelevation (A).

5. Chain rack (10) for a drive according to claim 3 or 4,
**characterized in that** the tensioning receptacle (11) is designed as a slotted box profile.

6. Chain rack (10) according to one of claims 1 to 5, **characterized in that** the push chain (1) is fixed to a bearing surface (F) at least in the direction of a driving force.

7. Chain rack (10) according to claim 6, **characterized in that** at least some chain plates are designed as angle plates (17) for fixing the push chain (1) to the bearing surface and as a component of the tensioning device.

8. Drive with a drive unit and a chain rack (10) according to one of claims 1 to 7, wherein the push chain (1) is arranged on a bearing surface (F) and is loaded under pressure in rack direction by means of a tensioning force (S) induced by the tensioning device (11), wherein the drive unit is in engagement with the chain rack (10) in order to move the chain rack (10) relative to the drive unit or vice versa.

9. Drive according to claim 8, **characterized in that** the drive unit comprises a sprocket (14), preferably with a rack-and-pinion gearing, which is in engagement with the chain rack (10).

10. Use of a superelevated push chain (1) in a chain rack (10) according to one of claims 2 to 8, wherein the push chain (1) is flattened or pressed flatter against the direction of superelevation by means of a tensioning device (11), so that the push chain (1) is pre-tensioned in the direction of pressure along a bearing surface (F).

## Revendications

1. Chaine formant crémaillère (10) pour un système d'entrainement, comprenant une chaine et un dispositif tendeur pour la mise en tension de la chaine,
**caractérisée en ce que** la chaine est réalisée sous forme de chaine de poussée (1) et une force de tension (S) est induite au moyen du dispositif tendeur (11) de manière telle, que la chaine de poussée (1) soit chargée en compression dans la direction de la crémaillère, et **en ce que** la chaine est réalisée sous forme de chaine de poussée (1) cambrée avec un cambre (A), le dispositif tendeur (11) réduisant le cambre (A) de la chaine de poussée (1), pour induire une force de tension (S) dans la chaine de poussée (1).

2. Chaine formant crémaillère (10) pour un système d'entrainement selon la revendication 1,
**caractérisée en ce que** le cambre (A) présente une valeur supérieure à 0%, de préférence supérieure à 0,2%, et de manière particulièrement préférée supérieure à 0,4% de la longueur de la chaine de poussée, et une valeur au plus de 6%, de préférence au plus de 4% et de manière particulièrement préférée au plus de 2,5% de la longueur de la chaine de poussée (1).

3. Chaine formant crémaillère (10) pour un système d'entrainement selon la revendication 1 ou la revendication 2,
**caractérisée en ce que** concernant le dispositif tendeur, il est prévu un logement de tendeur (11) avec des zones d'appui (12), la chaine de poussée (1) cambrée s'appuyant dans et/ou à l'encontre de la direction du cambre sur les zones d'appui (12), en vue de réduire le cambre (A) de la chaine de poussée (1).

4. Chaine formant crémaillère (10) pour un système d'entrainement selon l'une des revendications 1 à 3,
**caractérisée en ce que** la chaine de poussée (1) cambrée comporte des éclisses de rigidification (5, 7), qui présentent, sur le côté de rigidification de la chaine de poussée (1), une dimension de largeur d'appui réciproque (C) produisant le cambre (A).

5. Chaine formant crémaillère (10) pour un système d'entrainement selon la revendication 3 ou la revendication 4,
**caractérisée en ce que** le logement de tendeur (11) est réalisé sous forme de profilé en caisson fendu.

6. Chaine formant crémaillère (10) pour un système d'entrainement selon l'une des revendications 1 à 5,
**caractérisée en ce que** la chaine de poussée (1) est fixée sur une surface d'appui (F), au moins dans la direction d'une force d'entraînement.

7. Chaine formant crémaillère (10) pour un système d'entrainement selon la revendication 6,
**caractérisée en ce que** pour fixer la chaine de poussée (1) sur la surface d'appui, et en guise de partie constitutive du dispositif tendeur, au moins certaines éclisses de chaine sont réalisées sous forme d'éclisses coudées en cornière (17).

8. Système d'entrainement comprenant une unité d'entrainement et une chaine formant crémaillère (10) selon l'une des revendications 1 à 7, système dans lequel la chaine de poussée (1) est agencée sur une surface d'appui (F) et est précontrainte en compression dans la direction de la crémaillère au moyen d'une force de tension (S) induite par le dispositif tendeur (11), et dans lequel l'unité d'entrainement est en prise avec la chaine formant crémaillère (10), en vue de déplacer la chaine formant crémaillère (10) par rapport à l'unité d'entrainement, ou inversement.

9. Système d'entrainement selon la revendication 8,
**caractérisé en ce que** l'unité d'entrainement comprend une roue à chaine (14) en prise avec la chaine formant crémaillère (10) et présentant de préférence une denture à fuseaux.

10. Utilisation d'une chaine de poussée (1) cambrée pour former une crémaillère (10) selon l'une des revendications 1 à 8, d'après laquelle la chaine de poussée (1) est mise à plat ou rendue plus plate à l'encontre de la direction du cambre, au moyen d'un dispositif tendeur (11), de sorte que la chaine de poussée (1) est précontrainte en compression le long d'une surface d'appui (F).
